# EUROPEAN PATENT APPLICATION

(11) **EP 4 790 776 A1**
(43) Date of publication of application: **12.08.2026**
(21) Application number: 25864502.7
(22) Date of filing: 29.09.2025
(51) Int. Cl.: H01M 10/04, B30B 15/06, B30B 15/04

(54) **DEVICE FOR PRESSING POUCH-TYPE SECONDARY BATTERY AND METHOD FOR PRESSING POUCH-TYPE SECONDARY BATTERY USING SAME**

(30) Priority: 18.12.2024 KR 20240190566
(71) Applicant: LG ENERGY SOLUTION, LTD., Seoul 07335 (KR)
(72) Inventor: KIM, Young Woo, Daejeon 34122 (KR); BAE, Hyun Woo, Daejeon 34122 (KR); KANG, Tae Yeop, Daejeon 34122 (KR); SEO, Jun Yeong, Daejeon 34122 (KR)
(74) Representative: Goddar, Heinz J.
(86) International application number: PCT/KR2025/015356
(87) International publication number: WO 2026/134562

(57) **Abstract**

Disclosed are a pouch-shaped secondary battery pressing apparatus including a pressing plate configured to press a pouch-shaped secondary battery, a support plate located in front of the pressing plate, and a driving unit configured to drive the pressing plate forward and backward, wherein the pressing plate includes a first pressing plate configured to press a central part of the pouch-shaped secondary battery and a second pressing plate disposed on each of both sides of the first pressing plate, the second pressing plate being configured to press an edge of the pouch-shaped secondary battery, and a pouch-shaped secondary battery pressing method using the same.

## Description

### [Technical Field]

This application claims the benefit of priority to Korean Patent Application No. 10-2024-0190566 filed on December 18, 2024, the disclosure of which is incorporated herein by reference in its entirety.

The present invention relates to a pouch-shaped secondary battery pressing apparatus and a pouch-shaped secondary battery pressing method using the same, and more particularly to a pouch-shaped secondary battery pressing apparatus capable of uniformly pressing the entirety of a pouch-shaped secondary battery and a pouch-shaped secondary battery pressing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing method includes a process of inserting an electrode assembly into a receiving space of a battery case made of a laminate sheet, a process of injecting electrolyte into the battery case, a process of sealing the battery case, and an activation process. In the activation process, a formation jig configured to press a battery cell is used.

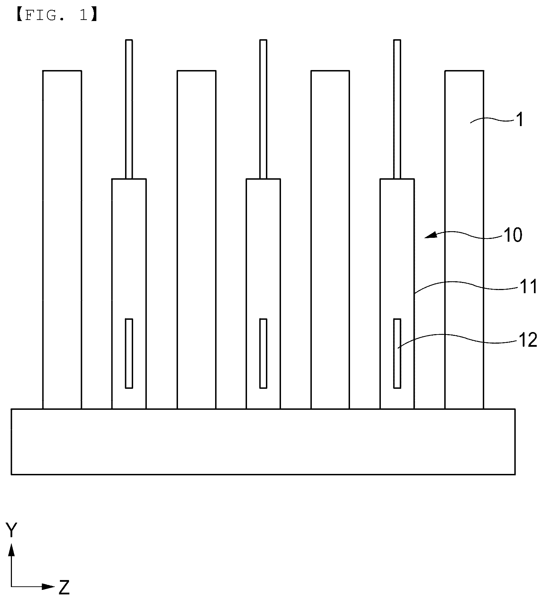

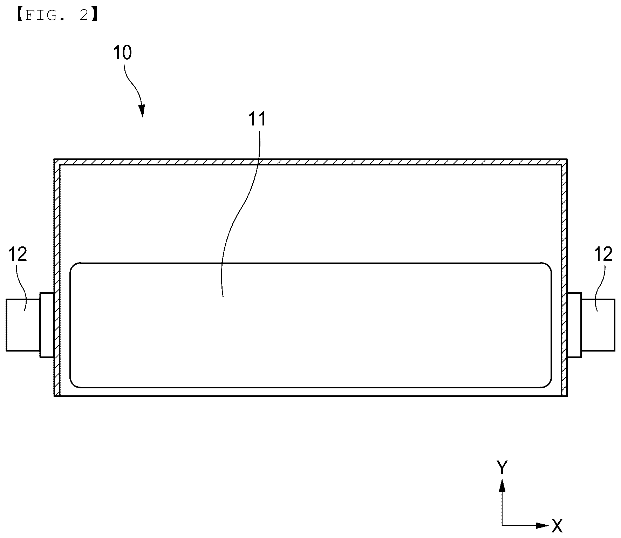

In this regard, FIG. 1 is a conceptual view showing a part of a conventional pouch-shaped secondary battery pressing apparatus, and FIG. 2 is a plan view illustrating a pouch-shaped secondary battery.

As shown in FIGs. 1 and 2, a process of activating the pouch-shaped secondary battery 10 may be performed by pressing the pouch-shaped secondary battery 10, which is disposed between a plurality of pressing plates 1, using the pressing plates 1.

However, since pressing is performed mainly using a central part of the pressing plate 1, the pressing force gradually decreases toward both sides of the pressing plate 1 in an overall-length direction if the length of the pouch-shaped secondary battery 10 in the overall-length direction increases, resulting in uneven pressure, which ultimately leads to battery defects.

### (Prior Art Document)

(Patent Document 1) Korean Patent Application Publication No. 10-2024-0044781

### [Disclosure]

### [Technical Problem]

The present invention has been made in view of the above problems, and it is an object of the present invention to provide a pouch-shaped secondary battery pressing apparatus capable of applying uniform pressure to a central part and an edge of a pouch-shaped secondary battery and a secondary battery pressing method using the same.

### [Technical Solution]

As a technical means for achieving the above object, a pouch-shaped secondary battery pressing apparatus according to an embodiment of the present invention includes a pressing plate (100) configured to press a pouch-shaped secondary battery (10), a support plate (200) located in front of the pressing plate (100), and a driving unit (300) configured to drive the pressing plate (100) forward and backward, wherein the pressing plate (100) includes a first pressing plate (110) configured to press a central part of the pouch-shaped secondary battery (10) and a second pressing plate (120) disposed on each of both sides of the first pressing plate (110), the second pressing plate being configured to press an edge of the pouch-shaped secondary battery (10).

Also, in the pouch-shaped secondary battery pressing apparatus according to the embodiment of the present invention, the driving unit (300) may include a first driving unit (310) configured to drive the first pressing plate (110) and a second driving unit (320) configured to drive the second pressing plate (120).

Also, in the pouch-shaped secondary battery pressing apparatus according to the embodiment of the present invention, the second pressing plate (120) may include a 2a pressing plate (121) located on one side of the first pressing plate (110) and a 2b pressing plate (122) located on the other side of the first pressing plate (110).

Also, in the pouch-shaped secondary battery pressing apparatus according to the embodiment of the present invention, the first pressing plate (110) may have a first depressed portion (111) formed on one side so as to be partially depressed and a second depressed portion (112) formed on the other side so as to be partially depressed, the 2a pressing plate (121) may have a first projecting portion (121a) formed so as to partially project for engagement with the first depressed portion (111), and the 2b pressing plate (122) may have a second projecting portion (122a) formed so as to partially project for engagement with the second depressed portion (112).

Also, in the pouch-shaped secondary battery pressing apparatus according to the embodiment of the present invention, the first pressing plate (110) may be configured to engage with the second pressing plate (120) during forward driving thereof and to disengage from the second pressing plate (120) during backward driving thereof.

Also, in the pouch-shaped secondary battery pressing apparatus according to the embodiment of the present invention, the second pressing plate (120) may be configured to disengage from the first pressing plate (110) during forward driving thereof and to engage with the first pressing plate (110) during backward driving thereof.

Also, in the pouch-shaped secondary battery pressing apparatus according to the embodiment of the present invention, the first driving unit (310) may be a motor.

Also, in the pouch-shaped secondary battery pressing apparatus according to the embodiment of the present invention, the second driving unit (320) may be a cylinder.

Also, in the pouch-shaped secondary battery pressing apparatus according to the embodiment of the present invention, the pressing plate may be provided in plural so as to be disposed in parallel in a state of being spaced apart from each other by a predetermined distance in a forward-backward direction.

Also, in the pouch-shaped secondary battery pressing apparatus according to the embodiment of the present invention, the support plate (200) may be located spaced apart forward from a frontmost one of the plurality of pressing plates (100) by a predetermined distance.

Also, in the pouch-shaped secondary battery pressing apparatus according to the embodiment of the present invention, when the pressing plates (100) press a plurality of pouch-shaped secondary batteries (10), the support plate may support and press a front surface of the frontmost one of the pouch-shaped secondary batteries (10).

Also, the pouch-shaped secondary battery pressing apparatus according to the embodiment of the present invention may further include a guide member (400) extending through the plurality of pressing plates (100), the guide member being configured to guide forward and backward driving of the plurality of pressing plates (100), one end of the guide member being connected to the support plate (200).

In addition, a pouch-shaped secondary battery pressing method using the pouch-shaped secondary battery pressing apparatus according to the embodiment of the present invention includes (S1) locating a pouch-shaped secondary battery (10) between the pair of pressing plates (100) or between the pressing plate (100) and the support plate (200), (S2) driving the pressing plate (100) forward through the driving unit (300), (S3) pressing the pouch-shaped secondary battery (10) through the pressing plate (100), and (S4) pressing edges of both sides of the pouch-shaped secondary battery (10) through the second pressing plate (120).

### [Advantageous Effects]

As is apparent from the above description, a pouch-shaped secondary battery pressing apparatus according to the present invention and a pouch-shaped secondary battery pressing method using the same have the advantage that a pressing plate is divided into a first pressing plate configured to press a central part of a pouch-shaped secondary battery and a second pressing plate configured to press an edge of the pouch-shaped secondary battery, whereby it is possible to press the entire surface of the pouch-shaped secondary battery with uniform pressure.

### [Description of Drawings]

FIG. 1 is a conceptual view showing a part of a conventional pouch-shaped secondary battery pressing apparatus.
FIG. 2 is a plan view illustrating a pouch-shaped secondary battery.
FIG. 3 is a perspective view of a pouch-shaped secondary battery pressing apparatus according to a first embodiment of the present invention.
FIG. 4 is a plan view illustrating the pouch-shaped secondary battery pressing apparatus according to the first embodiment of the present invention.
FIG. 5 is a plan view illustrating a pressing plate constituting the pouch-shaped secondary battery pressing apparatus according to the first embodiment of the present invention.
FIG. 6 is a perspective view illustrating that a pouch-shaped secondary battery is located on the pressing plate of the pouch-shaped secondary battery pressing apparatus according to the first embodiment of the present invention.
FIG. 7 is a conceptual view illustrating a driving method of the pouch-shaped secondary battery pressing apparatus according to the first embodiment of the present invention.
FIG. 8 is a plan view illustrating a modified pressing plate constituting the pouch-shaped secondary battery pressing apparatus according to the first embodiment of the present invention.
FIG. 9 is a perspective view of a pouch-shaped secondary battery pressing apparatus according to a second embodiment of the present invention.
FIG. 10 is a side view illustrating the pouch-shaped secondary battery pressing apparatus according to the second embodiment of the present invention.
FIG. 11 is a perspective view illustrating a pressing plate constituting the pouch-shaped secondary battery pressing apparatus according to the second embodiment of the present invention.
FIG. 12 is a perspective view illustrating that a pouch-shaped secondary battery is located on the pressing plate of the pouch-shaped secondary battery pressing apparatus according to the second embodiment of the present invention.
FIG. 13 is a conceptual view illustrating a driving method of the pouch-shaped secondary battery pressing apparatus according to the second embodiment of the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped secondary battery pressing apparatus according to the present invention and a pouch-shaped secondary battery pressing method using the same will be described.

First, referring to FIG. 2, a pouch-shaped secondary battery 10 may include a battery case 11 having an electrode assembly (not shown) with a pair of electrode leads 12 received therein and a sealed portion provided at an edge of the battery case 11. In this case, the battery case 11 may include a first pocket portion (not shown) configured to receive the electrode assembly and a second pocket portion (not shown) configured to capture gas. The pair of electrode leads 12 may be provided as a positive electrode lead and a negative electrode lead.

Meanwhile, the battery case 11 is manufactured using a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

Meanwhile, the electrode assembly received in the battery case 11 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

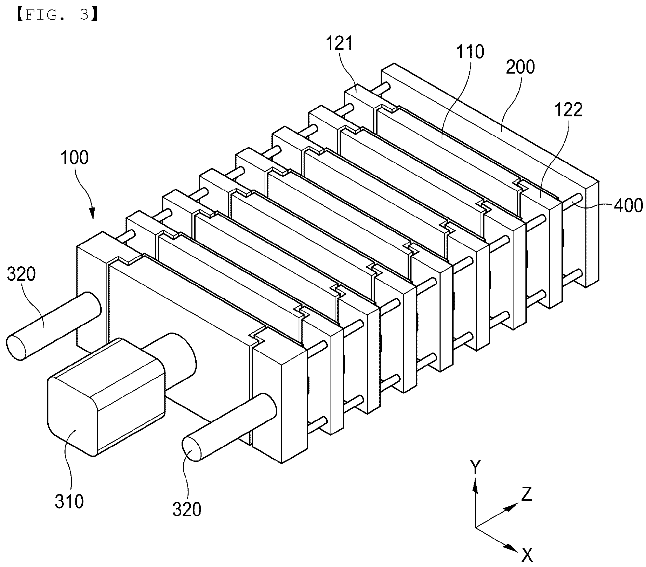

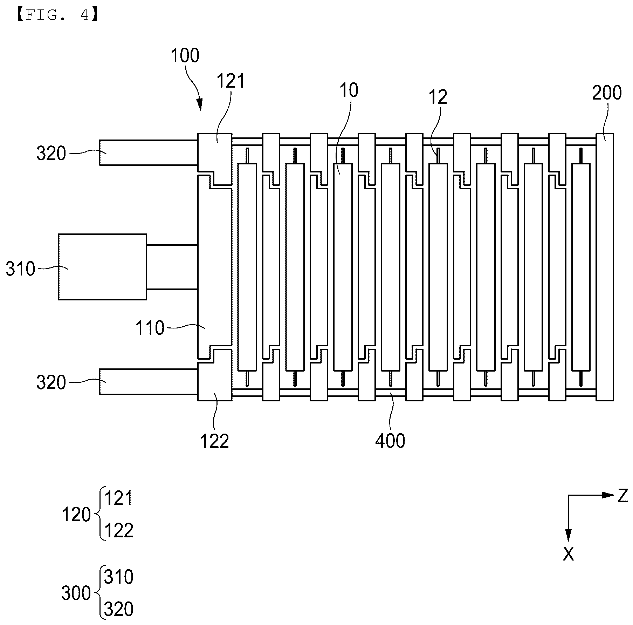

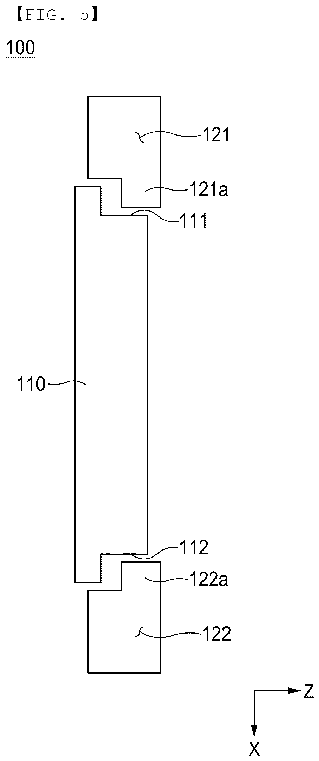

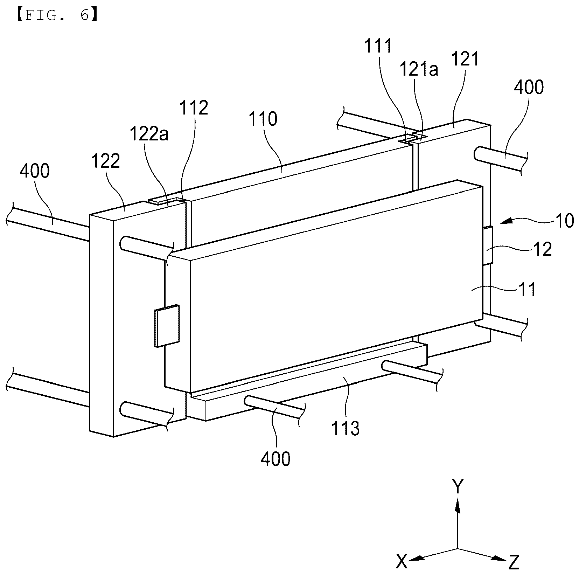

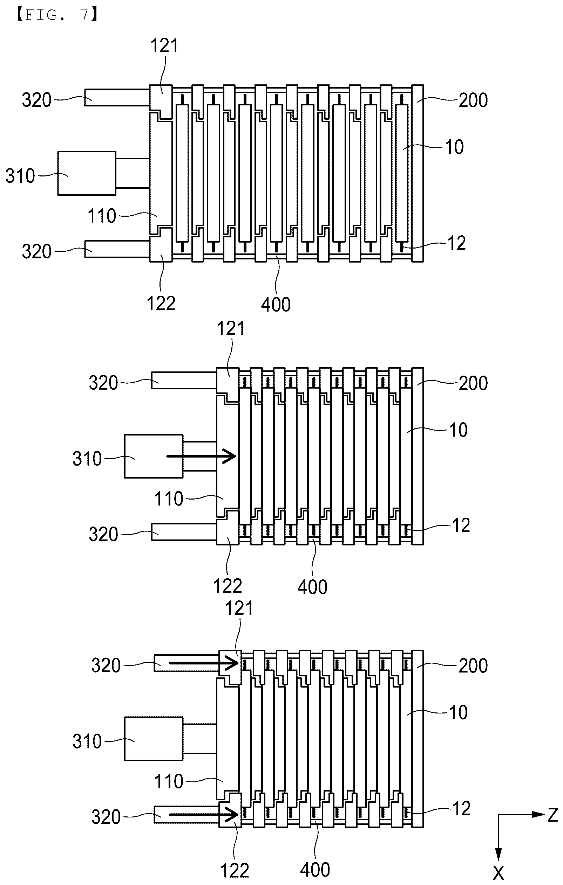

FIG. 3 is a perspective view of a pouch-shaped secondary battery pressing apparatus according to a first embodiment of the present invention, and FIG. 4 is a plan view illustrating the pouch-shaped secondary battery pressing apparatus according to the first embodiment of the present invention. In addition, FIG. 5 is a plan view illustrating a pressing plate constituting the pouch-shaped secondary battery pressing apparatus according to the first embodiment of the present invention, FIG. 6 is a perspective view illustrating that a pouch-shaped secondary battery is located on the pressing plate of the pouch-shaped secondary battery pressing apparatus according to the first embodiment of the present invention, and FIG. 7 is a conceptual view illustrating a driving method of the pouch-shaped secondary battery pressing apparatus according to the first embodiment of the present invention.

Referring to FIGs. 2 to 7, the pouch-shaped secondary battery pressing apparatus according to the first embodiment of the present invention includes a pressing plate 100, a support plate 200, a driving unit 300, and a guide member 400.

The pressing plate 100 may be provided in plural so as to press pouch-shaped secondary batteries 10, and may have an area equal to or greater than that of the pouch-shaped secondary battery 10 so as to press the entire surface of a pouch-shaped secondary battery 10.

In this case, the pouch-shaped secondary battery 10 pressed by the pressing plate 100 may be a bidirectional pouch-shaped secondary battery 10 provided with a pair of electrode leads 12 located opposite each other.

The pressing plates 100 may be disposed in parallel in a state of being spaced apart from each other by a predetermined distance in a forward-backward direction (a z-axis direction in FIG. 3) so as to be disposed on at least one of a front surface and a rear surface of the pouch-shaped secondary battery 10. The driving unit 300 may be connected to the pressing plate 100 located on the rearmost side (8 o'clock position in FIG. 3), among the plurality of pressing plates 100.

The pressing plate 100 may include a first pressing plate 110 configured to press a central part of the pouch-shaped secondary battery 10 and a second pressing plate 120 configured to press an edge of the pouch-shaped secondary battery 10. Here, the central part of the pouch-shaped secondary battery 10 refers to a central part in an overall-length direction of the pouch-shaped secondary battery 10, and the edge of the pouch-shaped secondary battery 10 may be an edge of each of both sides from which the pair of electrode leads 12 protrudes.

The pressing plate 100 may be divided into the first pressing plate 110 and the second pressing plate 120 such that, when pressing the pouch-shaped secondary battery 10, the second pressing plate 120 provides additional pressing force, whereby it is possible to provide pressing force so as to correspond to pressing force required by the edge of the pouch-shaped secondary battery 10. In this case, it is possible to more stably and accurately deliver pressing force so as to correspond to pressing force required by the central part and the edge of the pouch-shaped secondary battery 10 than the case in which a single pressing plate is provided and pressing force is applied to the central part and the edge of the pouch-shaped secondary battery through plurality of driving units.

It is preferable for the length of the first pressing plate 110 in the overall-length direction (x-axis direction in FIG. 6) to be less than the length of the pouch-shaped secondary battery 10 in the overall-length direction. Here, the overall-length direction of the pouch-shaped secondary battery 10 refers to the x-axis direction in which the pair of electrode leads 12 protrudes, and an overall-width direction of the pouch-shaped secondary battery refers to a y-axis direction in which the pair of electrode leads 12 does not protrude.

In addition, the first pressing plate 110 may be provided in opposite ends thereof with partially depressed portions 111 and 112. More specifically, a first partially depressed portion 111 may be formed in one end of the first pressing plate 110 (12 o'clock position in FIG. 5), and a second partially depressed portion 112 may be formed in the other end of the first pressing plate (6 o'clock position in FIG. 5).

The first depressed portion 111 and the second depressed portion 112 of the first pressing plate 110 may be formed so as to engage with the second pressing plate 120 through interlocking.

The second pressing plate 120 may include a 2a pressing plate 121 and a 2b pressing plate 122 disposed on both sides of the first pressing plate 110 to press the edge of the pouch-shaped secondary battery 10.

The length of the second pressing plate 120 in the overall-length direction (x-axis direction in FIG. 6) may be equal to or greater than the length from one end or the other end of the first pressing plate 110 to the edge of the pouch-shaped secondary battery 10.

The 2a pressing plate 121 may be located on one side of the first pressing plate 110 (12 o'clock position in FIG. 5) to press an edge of one side of the pouch-shaped secondary battery 10, and the 2b pressing plate 122 may be located on the other side of the first pressing plate 110 (6 o'clock position in FIG. 5) to press an edge of the other side of the pouch-shaped secondary battery 10.

The 2a pressing plate 121 may be provided with a first partially projecting portion 121a projecting to the other side (6 o'clock position in FIG. 5) so as to engage with the first depressed portion 111 of the first pressing plate 110. In this case, the first projecting portion 121a may be formed by the projection of the other end corresponding to a position where the first depressed portion 111 is formed for interlocking engagement with the first depressed portion 111, and may be formed in a shape corresponding to the first depressed portion 111.

For example, when the first depressed portion 111 is formed as the result of one side of a front end of the first pressing plate 110 being depressed inward, the first projecting portion 121a may be formed as the result of the other side of a front end of the second pressing plate 121 projecting outward. Consequently, the first projecting portion 121a and the first depressed portion 111 may engage with each other through interlocking. In this case, each of the first depressed portion 111 and the first projecting portion 121a may be formed in a stepped shape; however, the present invention is not limited thereto.

The first depressed portion 111 of the first pressing plate 110 may be formed such that a step is formed at a rear end thereof as a front end thereof is partially depressed, and the first projecting portion 121a may be formed such that a depressed portion is formed at a rear end thereof as a front end thereof partially projects, whereby contact may occur between the step and the first projecting portion 121a when the first pressing plate 110 moves forward.

In addition, the 2b pressing plate 122 may be provided with a second projecting portion 122a partially projecting to one side (12 o'clock position in FIG. 5) so as to engage with the second depressed portion 112 of the first pressing plate 110. In this case, the second projecting portion 122a may be formed by the projection of one end corresponding to a position where the second depressed portion 112 is formed for interlocking engagement with the second depressed portion 112, and may be formed in a shape corresponding to the second depressed portion 112.

For example, when the second depressed portion 112 is formed as the result of the other side of the front end of the first pressing plate 110 being depressed inward, the second projecting portion 122a may be formed as the result of one side of a front end of the 2b pressing plate 122 projecting outward. Consequently, the second projecting portion 122a and the second depressed portion 112 may engage with each other through interlocking. In this case, each of the second depressed portion 112 and the second projecting portion 122a may be formed in a stepped shape; however, the present invention is not limited thereto.

The second depressed portion 112 of the first pressing plate 110 may be formed such that a step is formed at a rear end thereof as a front end thereof is partially depressed, and the second projecting portion 122a may be formed such that a depressed portion is formed at a rear end thereof as a front end thereof partially projects, whereby contact may occur between the step and the second projecting portion 122a when the first pressing plate 110 moves forward.

As shown in FIG. 7, when the first pressing plate 110 moves forward, the steps formed by the depressed portions 111 and 112 may engage with the projecting portions 121a and 122a of the second pressing plate 120, respectively, causing the second pressing plate 120 to move forward, and when the second pressing plate 120 moves forward, the engagement may be released, allowing only the second pressing plate 120 to move forward, whereby it is possible to additionally press the edges of both sides of the pouch-shaped secondary battery 10.

In addition, when the second pressing plate 120 moves backward, the projecting portions 121a and 122a of the second pressing plate 120 may engage with the steps formed by the depressed portions 111 and 112 of the first pressing plate 110, respectively, causing the first pressing plate 110 to move backward, whereby it is possible to release pressing of the pouch-shaped secondary battery 10.

That is, due to interlocking engagement between the depressed portions 111 and 112 of the first pressing plate 110 and the projecting portions 121a and 122a of the second pressing plate 120, the first pressing plate 110 may engage with the second pressing plate 120 during forward driving thereof and may disengage from the second pressing plate 120 during backward driving thereof.

In addition, due to interlocking engagement between the depressed portions 111 and 112 of the first pressing plate 110 and the projecting portions 121a and 122a of the second pressing plate 120, the second pressing plate 120 may disengage from the first pressing plate 110 during forward driving thereof and may engage with the first pressing plate 110 during backward driving thereof.

At this time, the first pressing plate 110 and the second pressing plate 120 may be moved forward and backward by the driving unit 300. A more detailed description of the driving unit 300 will be given later.

Meanwhile, the support plate 200 may be located spaced apart forward from the pressing plate 100 located on the frontmost side (3 o'clock position in FIG. 4), among the plurality of pressing plates 100, by a predetermined distance.

In this case, the support plate 200 may be configured to support and press a front surface of the pouch-shaped secondary battery 10 located on the frontmost side when the pressing plates 100 press the plurality of pouch-shaped secondary batteries 10.

Each of the pressing plate 100 and the support plate 200 may be made of a rigid material so as to press front and rear surfaces of the battery case 11. More specifically, each of the pressing plate 100 and the support plate 200 may be made of a metal, such as aluminum; however, the present invention is not necessarily limited thereto.

The driving unit 300 may provide pressing force to the plurality of pressing plates 100 such that the pressing plates 100 are moved forward and backward to press the pouch-shaped secondary batteries 10. In this case, the driving unit 300 may be connected to the pressing plate 100 located on the rearmost side (9 o'clock position in FIG. 4), among the plurality of pressing plates 100, to provide forward and backward driving forces to the plurality of pressing plates 100.

The driving unit 300 may include a first driving unit 310 configured to drive the first pressing plates 110 forward and backward and a second driving unit 320 configured to drive the second pressing plates 120 forward and backward.

The first driving unit 310 may be connected to a rear surface of the first pressing plate 110 located on the rearmost side to provide forward and backward driving forces to the first pressing plates 110. In this case, the first driving unit 310 may be provided as a motor having a predetermined driving force or higher so as to forwardly move the second pressing plates 120 engaged with the first pressing plates 110 during forward driving; however, the present invention is not limited thereto, and a cylinder configured to provide forward and backward driving forces may be provided.

The second driving unit 320 may be connected to a rear surface of the second pressing plate 120 located on the rearmost side to provide forward and backward driving forces to the second pressing plates 120. In this case, the second driving unit 320 may be connected to rear surfaces of the 2a pressing plate 121 and the 2b pressing plate 122.

In addition, the second driving unit 320 may be configured to provide a predetermined additional pressing force or higher to the edge of the pouch-shaped secondary battery 10 after pressing the pouch-shaped secondary battery 10 through the first driving unit 310 and the first pressing plate 110. The second driving unit 320 may be provided as a cylinder; however, the present invention is not limited thereto, and a motor having a predetermined driving force or higher may be provided.

Accordingly, the first driving unit 310 may provide forward driving force to the first pressing plate 110 such that the first pressing plate 110 and the second pressing plate 120 press the pouch-shaped secondary battery 10, and the second driving unit 320 may additionally provide forward driving force to the second pressing plate 120 such that the second pressing plate 120 applies additional pressure to the edge of the pouch-shaped secondary battery 10, whereby uniform pressure may be applied to the entire area of the pouch-shaped secondary battery 10.

The guide member 400 may be configured to guide forward and backward driving of the plurality of pressing plates 100. The guide member 400 may extend through the plurality of pressing plates 100, and one end of the guide member may be connected to the support plate 200.

The guide member 400 may be provided in plural so as to be connected to the edge of one side and/or the edge of the other side of the second pressing plate 120 in order to guide the same. For example, at least one guide member 400 may be connected to the edge of one side of the 2a pressing plate 121, at least one guide member may be connected to the edge of the other side of the 2b pressing plate 122, and one end of each thereof may be connected to the support plate 200.

In addition, the guide member 400 may extend through a lower end of the first pressing plate 110 so as to be connected thereto. For example, a support ledge 113 may be formed on a lower end of the first pressing plate 110 so as to partially project forward such that the pouch-shaped secondary battery 10 is seated thereon, and the guide member 400 may extend through the support ledge 113 and be connected to the first pressing plate 110. In this case, it is preferable for the support ledge 113 to project by the thickness of the pouch-shaped secondary battery 10 or less so as not to interfere with pressing of the pouch-shaped secondary battery 10.

For example, one end of each of the plurality of guide members 400 may be connected to the support plate 200, and the other end of each of the plurality of guide members may be connected to the pressing plate 100 located on the rearmost side among the plurality of pressing plates 100.

As another example, one end of each of the plurality of guide members 400 may be connected to the support plate 200, the other end of each of the plurality of guide members may be connected to a motor or gear (not shown) located at the rear of the plurality of pressing plates 100. In this case, a male screw thread may be formed on an outer circumferential surface of each of the plurality of guide members 400, and a female screw thread may be formed on an inner circumferential surface of a through-hole of the pressing plate 100. Consequently, the pressing plate 100 may be driven forward and backward as the guide member 400 is rotated according to the rotation of the motor or gear (not shown).

Although the support ledge 113 is shown as being provided on the first pressing plate 110 in FIG. 6, the support protrusion may be omitted.

Referring to FIGs. 2 to 7, a pouch-shaped secondary battery pressing method using the pouch-shaped secondary battery pressing apparatus according to the first embodiment of the present invention includes (S1) a step of locating a pouch-shaped secondary battery 10 between the pair of pressing plates 100 or between the pressing plate 100 and the support plate 200, (S2) a step of driving the pressing plate 100 forward through the driving unit 300, (S3) a step of pressing the pouch-shaped secondary battery 10 through the pressing plate 100, and (S4) a step of pressing edges of both sides of the pouch-shaped secondary battery 10 through the second pressing plate 120.

In steps (S2) and (S3), the first pressing plate 110 and the second pressing plate 120 may be driven forward through the first driving unit 310 to press the pouch-shaped secondary battery 10.

Furthermore, in step (S4), the second pressing plate 120 may be driven forward through the second driving unit 320 to press the edges of both sides of the pouch-shaped secondary battery 10.

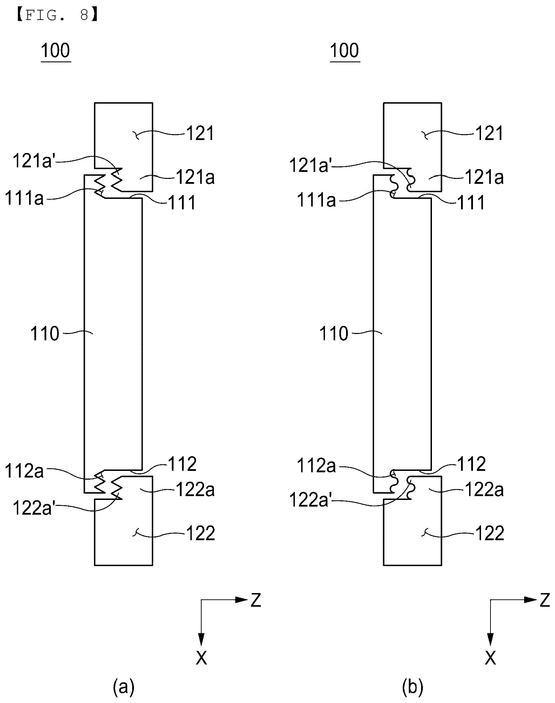

FIG. 8 is a plan view illustrating a modified pressing plate constituting the pouch-shaped secondary battery pressing apparatus according to the first embodiment of the present invention.

Referring to FIG. 8, recesses 111a and 112a partially depressed rearward may be formed in contact surfaces of the steps formed by the first depressed portion 111 and the second depressed portion 112 of the first pressing plate 110, respectively, and protrusions 121a' and 122a' configured to engage with the recesses 111a and 112a by interlocking engagement may be formed on contact surfaces of the first projecting portion 121a of the 2a pressing plate 121 and the second projecting portion 122a of the 2b pressing plate 122, respectively.

For example, referring to (a) of FIG. 8, the recesses 111a and 112a may be formed in a concave shape depressed inward from the contact surfaces of the steps formed by the first depressed portion 111 and the second depressed portion 112, and each of the protrusions 121a' and 122a' may be formed in a shape corresponding to a corresponding one of the recesses 111a and 112a. That is, the protrusions 121a' and 122a' may be formed in a convex shape projecting outward from the first projecting portion 121a and the second projecting portion 122a.

As another example, referring to (b) of FIG. 8, the recesses 111a and 112a may be formed in a semicircular shape depressed inward from the contact surfaces of the steps formed by the first depressed portion 111 and the second depressed portion 112, and each of the protrusions 121a' and 122a' may be formed in a shape corresponding to a corresponding one of the recesses 111a and 112a. That is, the protrusions 121a' and 122a' may be formed in a semicircular shape projecting outward from the first projecting portion 121a and the second projecting portion 122a.

The recesses 111a and 112a and the protrusions 121a' and 122a' may increase the engagement force between the first pressing plate 110 and the second pressing plate 120, thereby minimizing movement thereof to one side or the other side.

The shapes of the recesses 111a and 112a formed in the first pressing plate 110 and the protrusions 121a' and 122a' formed on the second pressing plate 120 are not limited thereto, and various interlocking-engagement shapes that are obvious to those skilled in the art may be used.

Conversely, protrusions (not shown) may be formed on the first pressing plate 110, and recesses (not shown) may be formed in the second pressing plate 120.

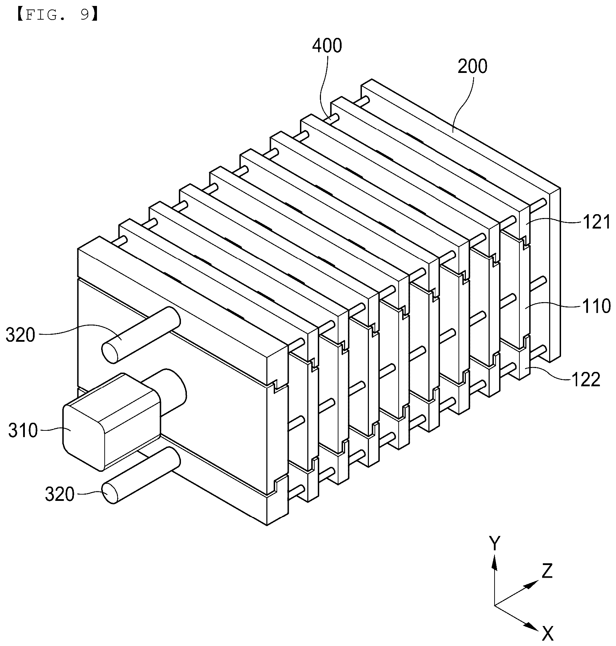

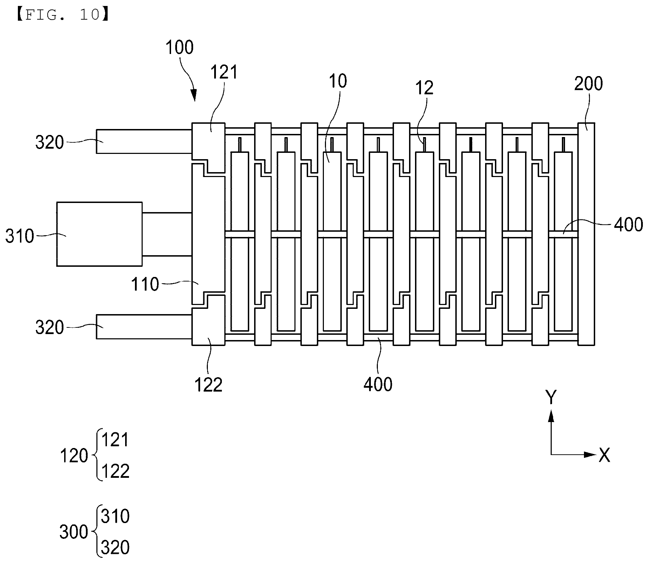

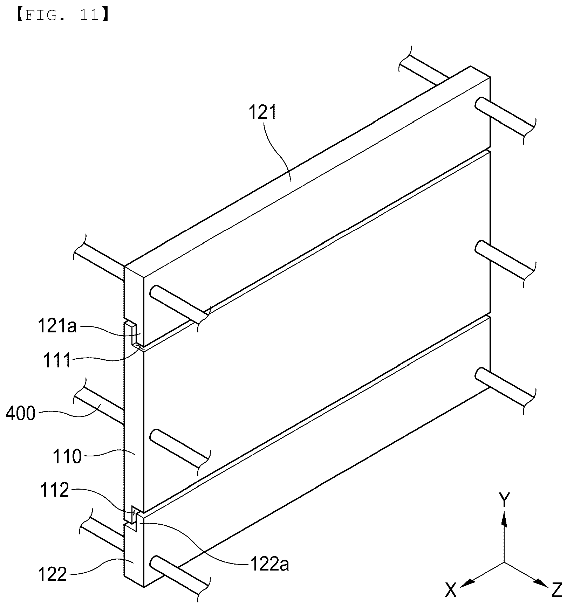

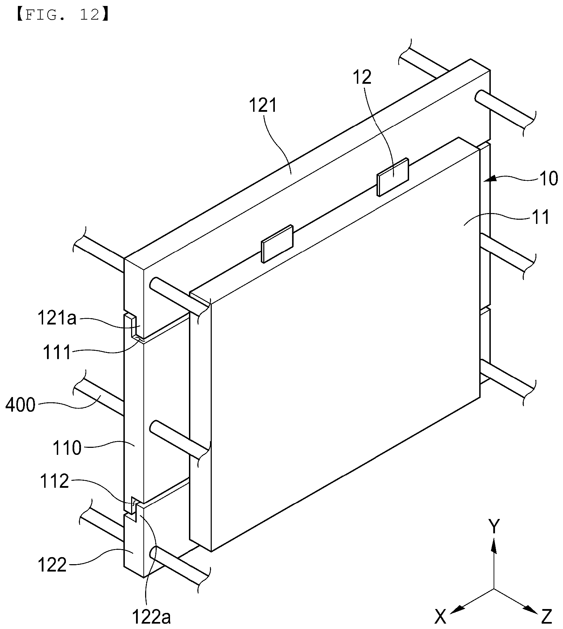

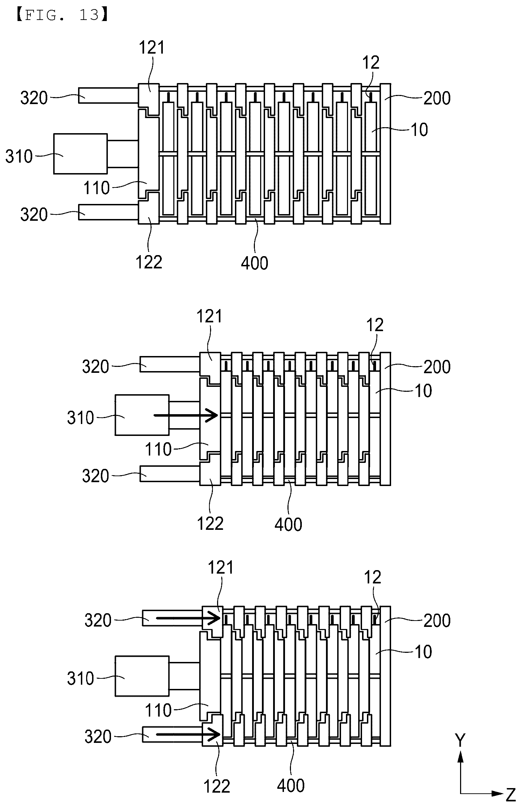

FIG. 9 is a perspective view of a pouch-shaped secondary battery pressing apparatus according to a second embodiment of the present invention, and FIG. 10 is a side view illustrating the pouch-shaped secondary battery pressing apparatus according to the second embodiment of the present invention. In addition, FIG. 11 is a perspective view illustrating a pressing plate constituting the pouch-shaped secondary battery pressing apparatus according to the second embodiment of the present invention, FIG. 12 is a perspective view illustrating that a pouch-shaped secondary battery is located on the pressing plate of the pouch-shaped secondary battery pressing apparatus according to the second embodiment of the present invention, and FIG. 13 is a conceptual view illustrating a driving method of the pouch-shaped secondary battery pressing apparatus according to the second embodiment of the present invention.

Referring to FIGs. 2 and 9 to 13, the pouch-shaped secondary battery pressing apparatus according to the second embodiment of the present invention includes a pressing plate 100, a support plate 200, a driving unit 300, and a guide member 400, like the first embodiment.

However, in the second embodiment, one side and the other side on which a first pressing plate 110 and a second pressing plate 120 constituting the pressing plate 100 are disposed may be oriented in the overall-width direction (y-axis direction in FIG. 11), unlike the first embodiment. In this case, a pouch-shaped secondary battery 10 pressed by the pressing plate 100 of the second embodiment may be a unidirectional pouch-shaped secondary battery 10 provided with electrode leads 12 located in one direction.

The overall-length direction of the pouch-shaped secondary battery 10 refers to the x-axis direction in which the pair of electrode leads 12 does not protrude, and the overall-width direction of the pouch-shaped secondary battery refers to the y-axis direction in which the pair of electrode leads 12 protrudes.

The first pressing plate 110 may be configured to press a central part of the pouch-shaped secondary battery 10 in the overall-width direction, and the second pressing plate 120 may be configured to press an edge of the pouch-shaped secondary battery 10 in the overall-width direction.

The length of the first pressing plate 110 in the overall-width direction (y-axis direction in FIG. 12) may be less than the length of the pouch-shaped secondary battery 10 in the overall-width direction, and the length of the first pressing plate in the overall-length direction (x-axis direction in FIG. 12) may be equal to or greater than the length of the pouch-shaped secondary battery 10 in the overall-length direction.

In addition, the length of the second pressing plate 120 in the overall-width direction (y-axis direction in FIG. 12) may be equal to or greater than the length from one end or the other end of the first pressing plate 110 to the edge of the pouch-shaped secondary battery 10 in the overall-width direction, and the length of the second pressing plate in the overall-length direction (x-axis direction in FIG. 12) may be equal to the length of the first pressing plate 10 in the overall-length direction.

In addition, the guide member 400 may extend through edges of both sides of the first pressing plate 110 and the second pressing plate 120 in the overall-length direction so as to be connected thereto.

A pouch-shaped secondary battery pressing method according to a second embodiment is substantially identical to the pouch-shaped secondary battery pressing method according to the first embodiment, and therefore a more detailed description thereof will be omitted.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

**(Description of Reference Symbols)**

| | |
|---|---|
| 10: pouch-shaped secondary battery | |
| 11: Battery case | 12: Electrode lead |
| 100: Pressing plate | |
| 110: First pressing plate | |
| 111: First depressed portion | 111a: Recess |
| 112: Second depressed portion | 112a: Recess |
| 113: Support ledge | |
| 120: Second pressing plate | |
| 121: 2a pressing plate | |
| 121a: First projecting portion | 121a': Protrusion |
| 122: 2b pressing plate | |
| 122a: Second projecting portion | 122a': Protrusion |
| 200: Support plate | |
| 300: Driving unit | |
| 310: First driving unit | |
| 320: Second driving unit | |
| 400: Guide member | |

## Claims

1. A pouch-shaped secondary battery pressing apparatus comprising:
a pressing plate configured to press a pouch-shaped secondary battery;
a support plate located in front of the pressing plate; and
a driving unit configured to drive the pressing plate forward and backward, wherein
the pressing plate comprises:
a first pressing plate configured to press a central part of the pouch-shaped secondary battery; and
a second pressing plate disposed on each of both sides of the first pressing plate, the second pressing plate being configured to press an edge of the pouch-shaped secondary battery.

2. The pouch-shaped secondary battery pressing apparatus according to claim 1, wherein the driving unit comprises:
a first driving unit configured to drive the first pressing plate; and
a second driving unit configured to drive the second pressing plate.

3. The pouch-shaped secondary battery pressing apparatus according to claim 2, wherein the second pressing plate comprises:
a 2a pressing plate located on one side of the first pressing plate; and
a 2b pressing plate located on the other side of the first pressing plate.

4. The pouch-shaped secondary battery pressing apparatus according to claim 3, wherein
the first pressing plate has a first depressed portion formed on one side so as to be partially depressed and a second depressed portion formed on the other side so as to be partially depressed,
the 2a pressing plate has a first projecting portion formed so as to partially project for engagement with the first depressed portion, and
the 2b pressing plate has a second projecting portion formed so as to partially project for engagement with the second depressed portion.

5. The pouch-shaped secondary battery pressing apparatus according to claim 4, wherein the first pressing plate is configured:
to engage with the second pressing plate during forward driving thereof; and
to disengage from the second pressing plate during backward driving thereof.

6. The pouch-shaped secondary battery pressing apparatus according to claim 4, wherein the second pressing plate is configured:
to disengage from the first pressing plate during forward driving thereof; and
to engage with the first pressing plate during backward driving thereof.

7. The pouch-shaped secondary battery pressing apparatus according to claim 2, wherein the first driving unit is a motor.

8. The pouch-shaped secondary battery pressing apparatus according to claim 2, wherein the second driving unit is a cylinder.

9. The pouch-shaped secondary battery pressing apparatus according to claim 2, wherein the pressing plate is provided in plural so as to be disposed in parallel in a state of being spaced apart from each other by a predetermined distance in a forward-backward direction.

10. The pouch-shaped secondary battery pressing apparatus according to claim 9, wherein the support plate is located spaced apart forward from a frontmost one of the plurality of pressing plates by a predetermined distance.

11. The pouch-shaped secondary battery pressing apparatus according to claim 10, wherein, when the pressing plates press a plurality of pouch-shaped secondary batteries, the support plate supports and presses a front surface of a frontmost one of the pouch-shaped secondary batteries.

12. The pouch-shaped secondary battery pressing apparatus according to claim 10, further comprising a guide member extending through the plurality of pressing plates, the guide member being configured to guide forward and backward driving of the plurality of pressing plates, one end of the guide member being connected to the support plate.

13. A pouch-shaped secondary battery pressing method using the pouch-shaped secondary battery pressing apparatus according to any one of claims 1 to 12, the pouch-shaped secondary battery pressing method comprising:
(S1) locating a pouch-shaped secondary battery between the pair of pressing plates or between the pressing plate and the support plate;
(S2) driving the pressing plate forward through the driving unit;
(S3) pressing the pouch-shaped secondary battery through the pressing plate; and
(S4) pressing edges of both sides of the pouch-shaped secondary battery (10) through the second pressing plate.
